# EUROPEAN PATENT SPECIFICATION

(11) **EP 4 030 722 B1**
(45) Date of publication and mention of the grant of the patent: **30.08.2023**
(21) Application number: 21151512.7
(22) Date of filing: 14.01.2021
(51) Int. Cl.: G06F 21/60, H04L 9/40

(54) **ARRANGEMENT FOR TRANSFORMING PACKETS IN IP COMMUNICATION NETWORK**
ANORDNUNG ZUR UMWANDLUNG VON PAKETEN IN EINEM IP-KOMMUNIKATIONSNETZWERK
AGENCEMENT DE TRANSFORMATION DE PAQUETS DANS UN RÉSEAU DE COMMUNICATION IP

(43) Date of publication of application: 20.07.2022
(73) Proprietor: Insta Advance Oy, 33900 Tampere (FI)
(72) Inventor: Männistö, Tatu, 33900 Tampere (FI); Ruohonen, Joonas, 33900 Tampere (FI)
(74) Representative: Kolster Oy Ab

(56) References cited:
- US-A1- 2002 188 839
- US-A1- 2002 188 871

## Description

### FIELD

Various embodiments relate to an arrangement for transforming packets in an Internet Protocol (IP) communication network. The arrangement comprises a preprocessing apparatus, a cryptographic module, and a communication coupling between the preprocessing apparatus and the cryptographic module.

### BACKGROUND

Confidential information is transformed (to ensure confidentiality, integrity, and authenticity) and transmitted over IP communication networks. However, for highly sensitive information such as governmental and military information, a specific hardware-implemented cryptographic module is required. Due to the vast amount of the information, a high speed data transmission is preferred, but the hardware-implemented cryptographic module with a corresponding fast encryption capability becomes complicated and therefore difficult to audit and verify, and also increases the costs of manufacture and operation.

US2002/0188871A1 discloses a system and a method for managing security packet processing, which includes an IPSec manager to interface with an IPSec engine, to manage memory and to handle exceptions associated with IPSec packet processing.

US2002/0188839A1 discloses a method and a system for high-speed processing IPSec security protocol packets for processing IPSec security protocol packets in a hardware configuration.

### BRIEF DESCRIPTION

According to an aspect, there is provided subject matter of independent claims. Dependent claims define some embodiments.

One or more examples of implementations are set forth in more detail in the accompanying drawings and the description of embodiments.

### LIST OF DRAWINGS

Some embodiments will now be described with reference to the accompanying drawings, in which
FIG. 1 illustrates embodiments of an arrangement for transforming packets in an IP communication network;
FIG. 2 and FIG. 3 illustrate further embodiments of the arrangement;
FIG. 4 illustrates embodiments of a cryptographic module;
FIG. 5 is a flow chart illustrating embodiments of data processing in the arrangement; and
FIG. 6 and FIG. 7 are signal sequence charts illustrating embodiments of communication in the arrangement.

### DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

Reference numbers, both in the description of the embodiments and in the claims, serve to illustrate the embodiments with reference to the drawings, without limiting it to these examples only.

The embodiments and features, if any, disclosed in the following description that do not fall under the scope of the independent claims are to be interpreted as examples useful for understanding various embodiments of the invention.

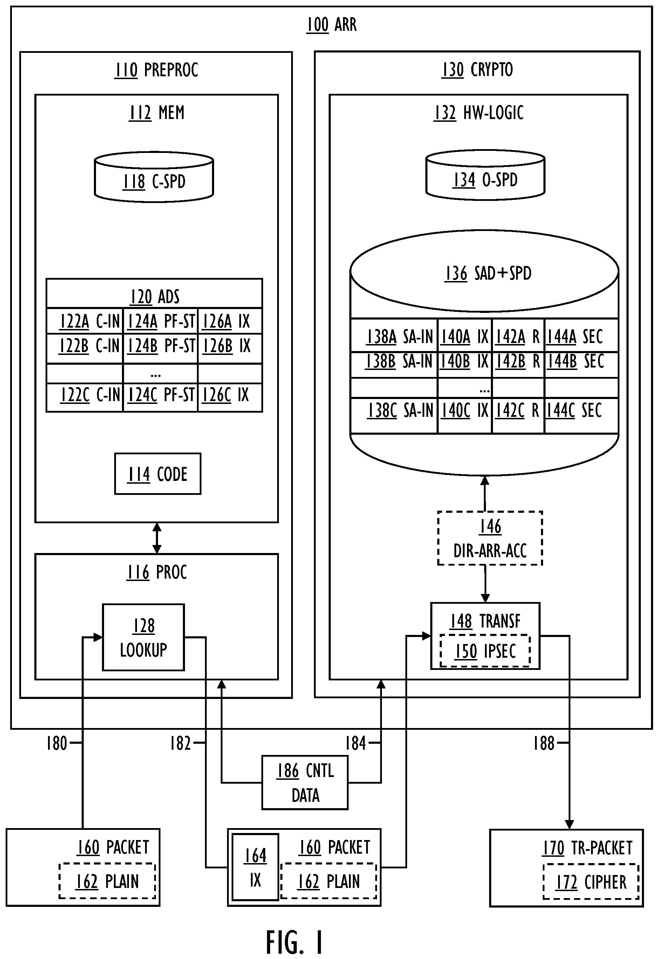

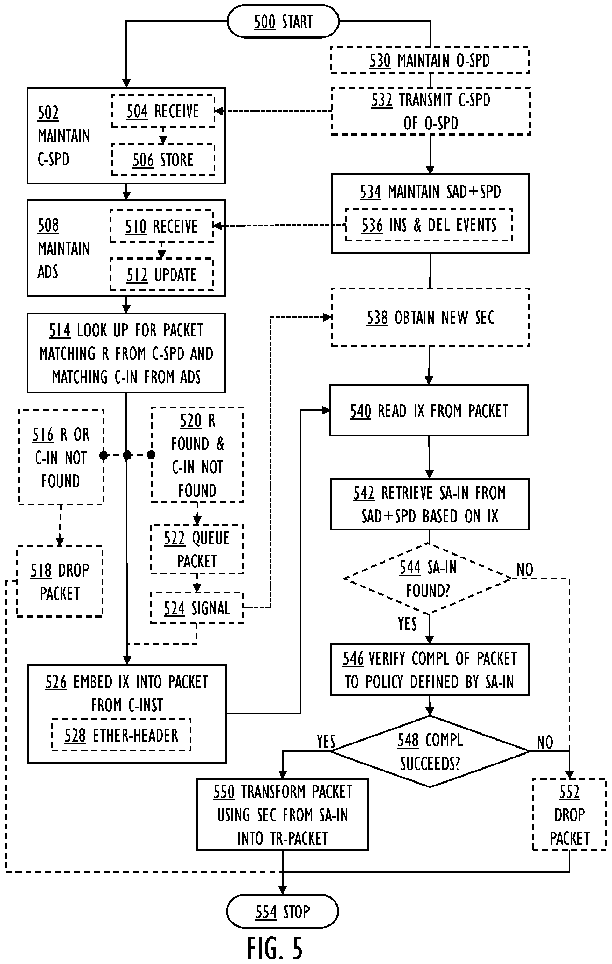

Let us study simultaneously FIG. 1, which illustrates embodiments of an arrangement 100 for transforming packets in the IP communication network, and FIG. 5, which is a flow chart illustrating embodiments of data processing in the arrangement 100.

The arrangement 100 comprises a preprocessing apparatus 110, a cryptographic module 130, and a communication coupling 182 between the preprocessing apparatus 110 and the cryptographic module 130.

The data processing performed by the arrangement 100 may be construed as a distributed method or algorithm, performed by the preprocessing apparatus 110 and the cryptographic module 130.

The preprocessing apparatus 110 comprises one or more memories 112 including computer program code 114, and one or more processors 116 configured to execute the computer program 114 code to cause the preprocessing apparatus 110 to perform the required data processing 128.

The term 'processor' 116 refers to a device that is capable of processing data. In an embodiment, the processor 116 is implemented as a microprocessor implementing functions of a central processing unit (CPU) on an integrated circuit. The CPU is a logic machine executing the computer program code 114. The CPU may comprise a set of registers, an arithmetic logic unit (ALU), and a control unit (CU). The control unit is controlled by a sequence of the computer program code 114 transferred to the CPU from the (working) memory 112. The control unit may contain a number of microinstructions for basic operations. The implementation of the microinstructions may vary, depending on the CPU design. The one or more processors 116 may be implemented as cores of a single processors and/or as separate processors.

The term 'memory' 112 refers to a device that is capable of storing data run-time (= working memory) or permanently (= non-volatile memory). The working memory and the non-volatile memory may be implemented by a random-access memory (RAM), dynamic RAM (DRAM), static RAM (SRAM), a flash memory, a solid state disk (SSD), PROM (programmable read-only memory), a suitable semiconductor, or any other means of implementing an electrical computer memory.

The computer program code 114 is implemented by software. In an embodiment, the software may be written by a suitable programming language, and the resulting executable code may be stored in the memory 112 and executed by the one or more processors 116.

The computer program code 114 implements a part of the method/algorithm for transforming packets in the IP communication network. The computer program code 114 may be coded as a computer program (or software) using a programming language, which may be a high-level programming language, such as C, C++ or Rust, or a low-level programming language, such as a machine language or an assembler, for example. The computer program code 114 may be in source code form, object code form, executable file, or in some intermediate form, but for use in the one or more processors 116 it is in an executable form. There are many ways to structure the computer program code 114: the operations may be divided into modules, sub-routines, methods, classes, objects, applets, macros, etc., depending on the software design methodology and the programming language used. In modern programming environments, there are software libraries, i.e. compilations of ready-made functions, which may be utilized by the computer program code 114 for performing a wide variety of standard operations. In addition, an operating system (such as a general-purpose operating system) may provide the computer program code 114 with system services.

The cryptographic module 130 comprises a hardware logic 132 configured to cause the cryptographic module 130 to perform the required data processing 148. In an embodiment, the hardware logic 132 is implemented using a field-programmable gate array (FPGA) or an application-specific integrated circuit (ASIC). The operation of the cryptographic module 130 may be augmented by special integrated circuits as will be explained later.

In essence, the arrangement 100 comprises two logically separate data processing entities: the preprocessing apparatus 110 and the cryptographic module 130. The preprocessing apparatus 110 and the cryptographic module 130 may be implemented as two physically separate apparatuses, and the communication coupling 182 may be implemented by suitable means such as an optical link. The preprocessing apparatus 110 and the cryptographic module 130 may also be implemented as two physically separate cards, and the communication coupling 182 may be implemented by a suitable bus, such as connectors and paths of a circuit board, such as a backplane of a equipment rack or cabinet housing the preprocessing apparatus 110 and the cryptographic module 130. In an embodiment described later, the preprocessing apparatus 110 may be embedded in a network node of the IP communication network.

In an embodiment, the communication coupling 182 comprises an IP traffic channel configured to transmit the packets 160 from the preprocessing apparatus 110 to the cryptographic module 130. In an embodiment, a separate communication channel 184 is configured to transfer control data 186 (= traffic other than the packets 160) between the preprocessing apparatus 110 and the cryptographic module 130. The communication channel 184 may be implemented as a serial peripheral interface (SPI), for example. The separate communication channel 184 may operate on-demand to transfer the control data 186.

Let us now study the method with reference to FIG. 5. Note that FIG. 5 depicts the main sequence of the method, but also some optional embodiments.

The method starts in 500 and ends in 554. Note that the method may run as long as required (after the start-up of the arrangement 100 until switching off) by looping back to an operation 502.

The operations are not strictly in chronological order in FIG. 5, and some of the operations may be performed simultaneously or in an order differing from the given ones. Other functions may also be executed between the operations or within the operations and other data exchanged between the operations. Some of the operations or part of the operations may also be left out or replaced by a corresponding operation or part of the operation. It should be noted that no special order of operations is required, except where necessary due to the logical requirements for the processing order.

Let us first define some basic concepts defined in Internet Protocol Security or IPsec secure network protocol suite.

A configuration time, static security policy database (SPD) comprises rules of what traffic must be protected, algorithms to be used, and how to get secret key material. A rule may match multiple packet fields, rules must be processed in order, first match wins. One rule may cover multiple traffic flows. The SPD does not contain secret keys. The SPD may contain thousands of rules.

A run-time, dynamic security association database (SAD) comprises information of specific encryption flows with actual secret keys. The SAD contains the encryption state (e.g. sequence and packet counters) of a flow in a form of security association (SA). Security associations are instantiated based on rules from the SPD. The SAD may contain thousands of entries.

Basically, a packet flows as follows:
1) Find the first matching rule in the SPD: using 5-tuple (source + destination addresses and ports, protocol) as the selector.
2) If a rule action is BLOCK or no entry is found in the SPD, stop the processing, and drop the packet.
3) Map the packet to a correct SAD entry.
4) If no SAD match is found, start a key negotiation protocol to get secret key material, drop or queue the current packet, and add an entry to the SAD with the secret key material after the key negotiation is done and the key material is available.
5) Use the found SAD entry information to protect the packet: the secret key material from SAD entry to encrypt packet, and apply an IPsec ESP tunnel transformation.

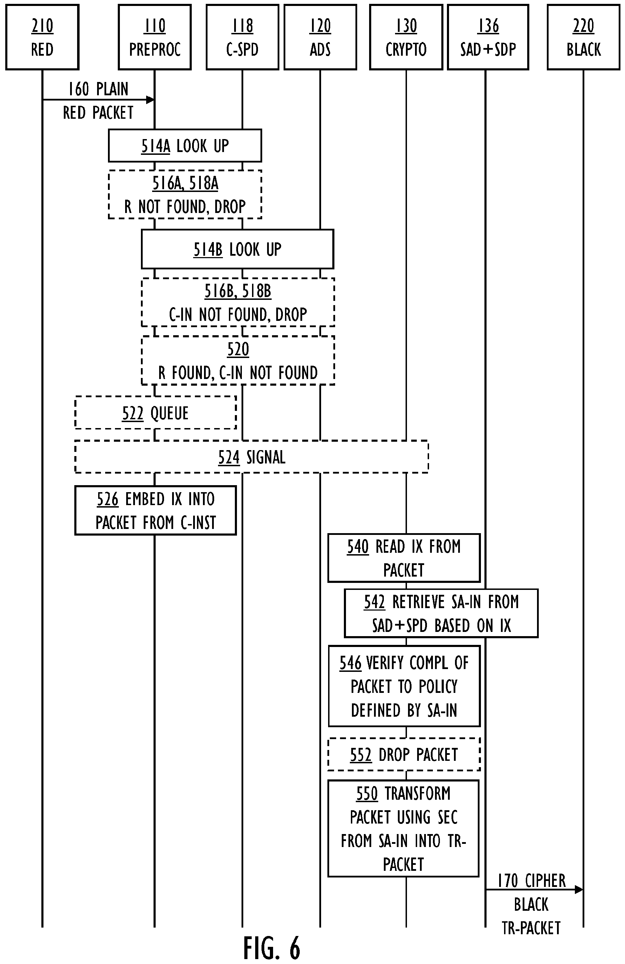

In the present embodiments, this flow is implemented as explained in the following, also referring to FIG. 6, which is a signal sequence chart illustrating embodiments of communication in the arrangement 100 between various actors.

In 502, a copy of a security policy database 118 accommodating rules received from the cryptographic module 130 is maintained by the preprocessing apparatus 110.

In 508, an association data structure 120 accommodating a plurality of copy instances 122A, 122B, 122C based on data received from the cryptographic module 130 is maintained by the preprocessing apparatus 110.

Each copy instance 122A, 122B, 122C contains a state 124A, 124B, 124C of a flow of packets, without secret keys, but with an index 126A, 126B, 126C to a corresponding security association instance 138A, 138B, 138C in a security association database 136 of the cryptographic module 130.

In 514, a matching rule from the copy of the security policy database 118 and a matching copy instance 122A from the association data structure 120 are looked up for a packet 160 by the preprocessing apparatus 110. Note that in FIG. 6, the two look ups are described separately 514A, 514B.

In an embodiment, the preprocessing apparatus 110 is caused, after looking up the matching rule from the copy of the security policy database 118 and the matching copy instance 122A from the association data structure 120 for the packet 160 in 514, if the matching rule or the matching copy instance 122A is not found in 516, to drop the packet 160 in 518. Note that in FIG. 6, as the two look ups are described separately 514A, 514B, also the operations 516A, 518A and 516B, 518B are duplicated.

In 526, an index 164/126A from the matching copy instance 122A is embedded into the packet 160 by the preprocessing apparatus 110.

In 534, the security association database 136 accommodating a plurality of security association instances 138A, 138B, 138C is maintained by the cryptographic module 130.

Each security association instance 138A, 138B, 138C is accessible by an index 140A, 140B, 140C and contains rules 142A, 142B, 142C of the security policy database 134 relevant for the security association instance 138A, 138B, 138C.

In 540, the index 164 from the packet 160 is read by the cryptographic module 130.

In 542, a security association instance 138A is retrieved by the cryptographic module 130 from the security association database 136 based on the index 166.

In an embodiment, a test is made by the cryptographic module in 544 after reading the index 164 in 540: if no security association instance 138A is found 544-NO in the security association database 136 based on the index 164, the packet 160 is dropped in 552, else 546 is entered.

In 546, a compliance of the packet 160 is verified by the cryptographic module 130 to a policy defined by the security association instance 138A.

Next, a test is made by the cryptographic module 130 in 548.

If the compliance of the packet 160 succeeds 548-YES, the packet 160 is transformed by the cryptographic module 130 using secret keys 144A of the retrieved security association instance 138A into a transformed packet 170 in 550. This completes the main sequence.

In an embodiment the cryptographic module 130 is caused, after the verifying of the compliance in 546, if the compliance of the packet 160 fails 548-NO, to drop the packet 160 in 552. The cryptographic module 130 may then also raise an audit event.

The described division of the data processing between the lookup part 128 of the method/algorithm by the preprocessing apparatus 110 and the transformation part 148 of the method/algorithm by the cryptographic module 130 provides several advantages.

If a high security level of the encryption is needed, a pure processor and software -based solution is not considered secure (being vulnerable to a meltdown, spectre, enclave escape, side channels, and other attacks). Also, the runtime integrity of the data processing and cryptographic algorithms must be guaranteed, which may be achieved by a as simple as possible implementation, which allows an audit and verification. These requirements may be met by an implementation using pure hardware logic, but if high data transmission speeds (such as 1 Gbps or more, or 10 Gbps or more) are required, the pure hardware logic implementation becomes complicated and expensive. This is because: the pure hardware logic is not good at searching the SPD or the SAD, the SPD rules may contain complex match conditions, and only a very limited amount of internal hardware logic memory may be available as the storage space is needed to store the security association instances.

As the SAD search must be done at a line speed (the speed of 10 gigabytes per second translates into about 15 million packets per second), the processor and software -based solution is good at searching the SPD and SAD due to a more sophisticated memory and parallel processing resources.

In the described division of the data processing 128/148, the preprocessing apparatus 110 first performs the SPD and SAD searches, and the cryptographic module 130 next verifies these search results without exposing secret keys outside of the cryptographic module 130. In a way, the preprocessing apparatus 110 acts as an oracle to the cryptographic module 130. There is no need to trust that the preprocessing apparatus 110 operates correctly as an incorrect operation will be detected by the cryptographic module 130. The cryptographic module 130 remains in full control of the transformation (including secure keys and required algorithms) at all times.

The described division of the data processing 128/148 achieves high speed and security due to the optimized searches in the preprocessing apparatus 110, but letting the actual transformation with secret keys to remain in the cryptographic module 130.

For example, a 64-bit processor technology AMDOO x86-64 uses a clock frequency, which is about ten times higher than a clock frequency of a FPGA in Xilinx^{®} Zynq^{®} Ultrascale+^{™} multiprocessor system on a chip (MPSoC).

The preprocessing apparatus 110 may also utilize an optimized memory architecture (a large L2 cache, and a large system memory, for example), and, due to multiple cores available, searches may be made in parallel over multiple cores.

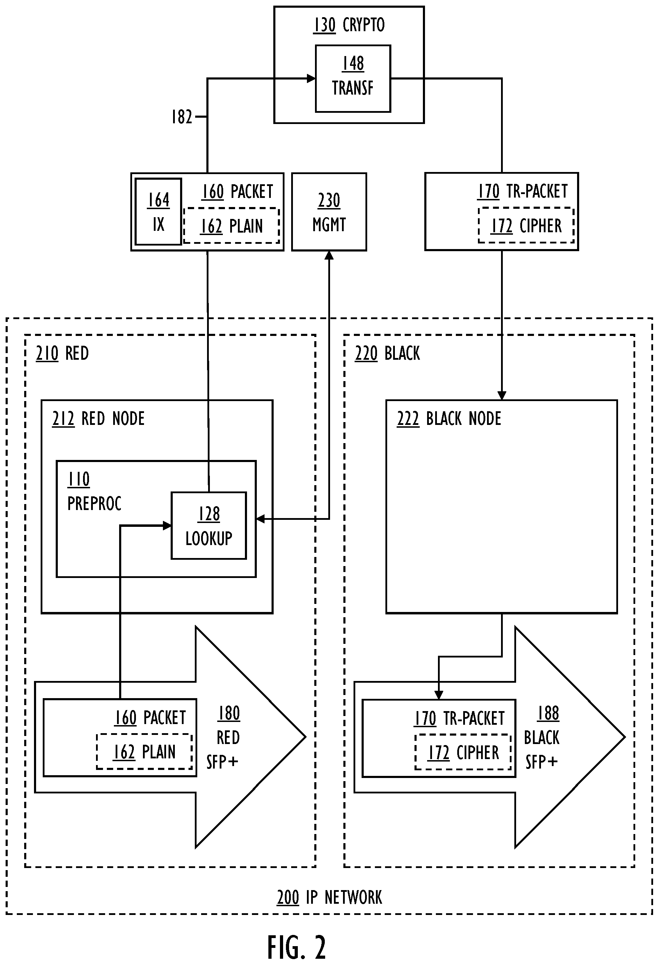

In an embodiment illustrated in FIG. 2, the IP communication network 200 comprises a red-black architecture having a red side 210 and a black side 220. The red side 210 has a high security level and the black side 220 has a low security level, wherein the high security level is more secure than the low security level.

Plaintext information 162 of the packet 160 in the red side 210 is transformed into ciphertext information 172 of the transformed packet 170 for the black side 220.

The cryptographic module 130 is the only component with access to both the red side 210 and the black side 220, thereby achieving a red-black separation. The cryptographic module 130 establishes verifiable paths between the red side 210 (secure, trusted, plaintext) and the black side 220 (unsecure, untrusted, ciphertext). Note that the cryptographic module 130 remains at all times in full control of the secret keys.

FIG. 2 also illustrates an embodiment, wherein the preprocessing apparatus 110 is comprised in a network node 212 (such as an IP packet processing node, including, but not limited to a router with a firewall) operating in the red side 210. Also note a network node 222 operating in the black side 220. The IP communication network 200 may be accessed by optical SFP+ (small form-factor pluggable) network interface modules 180, 188 at both the red side 210 and the black side 220, which eliminates attack possibilities due to a side channel caused by an electromagnetic radiation (when using a coaxial cable) .

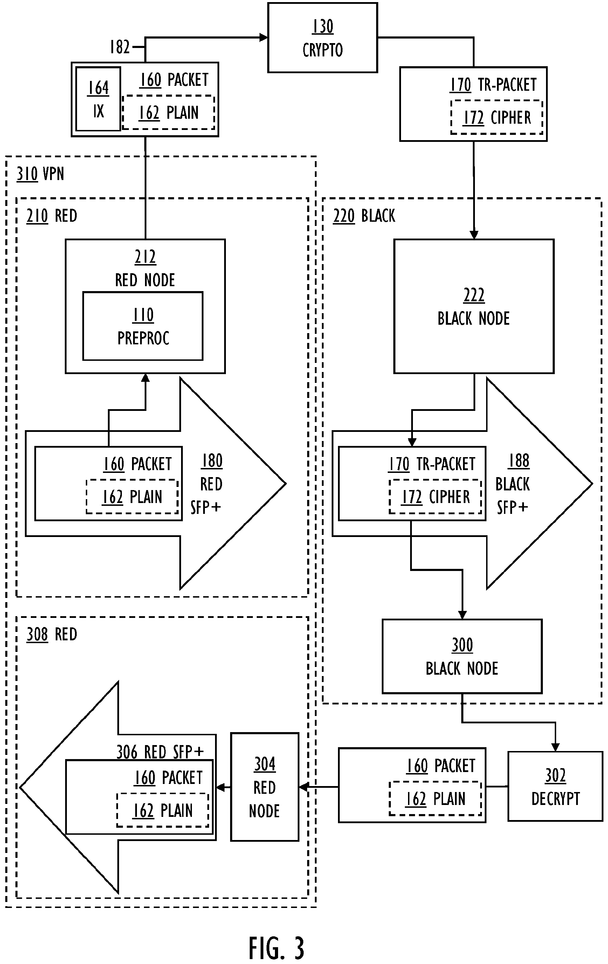

FIG. 3 illustrates an embodiment, wherein the IP communication network 200 comprises a virtual private network 310 extending the red side 210, 308 across the black side 220. The first red side 210 of the virtual private network 310 and the second red side 308 of the virtual private network 310 are well-protected and isolated from the black side 220 of the IP communication network. The black side 220 may comprise the Internet, or even a private network but with a lower level of security than the red sides 210, 308. In a typical use case, isolated red sides 210, 308 are at different geographic locations (different parts of a city, different cities, different countries, or even different continents), and the plaintext information 162 of the packets 160 inside the red sides 210, 308 must be transformed into the ciphertext information 172 of the transformed packets 170 for the transmission over the black side 220.

Note the additional network nodes 300, 304 operating in the black side 220 and the second red side 308, a decrypting apparatus 302, and an additional SFP+ network interface module 306 in the second red side 308.

Let us next study some optional embodiments.

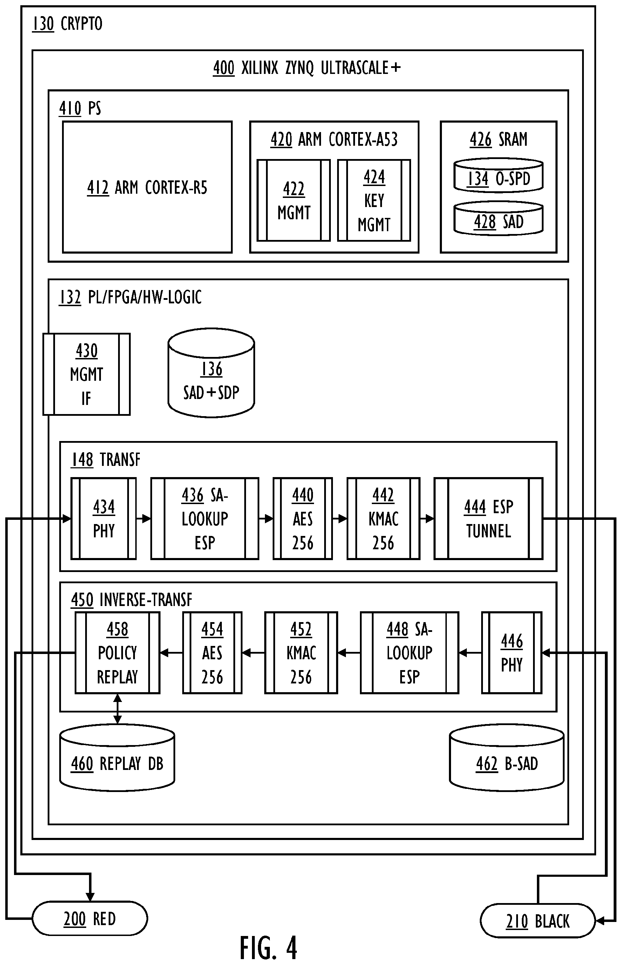

FIG. 4 illustrates embodiments of the cryptographic module 130 implemented using Xilinx^{®} Zynq^{®} Ultrascale+^{™} MPSoC. This MPSoC may be divided into two main parts, a Processing System (PS) 410 and a Programmable Logic (PL) 132. Note that this embodiment is just an example, as the hardware logic 132 may also be implemented in a different kind of an FPGA or ASIC environment. Note also that all required functionality may be implemented only with the hardware logic 132 (without needing the PS 410), or by using one or more soft microprocessors, which are microprocessor cores wholly implemented using a logic synthesis.

The hardware logic 132 is called the PL in this environment and is implemented as an FPGA containing an array of programmable logic blocks and memory elements. The PL 132 is specified using a hardware description language (HDL) such as VHDL (Very High Speed Integrated Circuit VHSIC HDL) standardized as IEEE 1076 or Verilog standardized as IEEE 1364.

The memory elements are used to store the security association database 136 accommodating the plurality of security association instances 138A, 138B, 138C.

The PL 132 is used to implement the transformation block 148 as described previously, which includes a physical interface 434, a SA-lookup ESP 436, an encryption 438 from the red side 200 to the black side 210 (using the Advanced Encryption Standard (AES) defined in ISO/IEC 18033-3 with a key size of 256 bits, and an Secure Hash Algorithm 3 (SHA-3) derived KMAC 256 keyed hash function defined in NIST SP-800-185), and an ESP tunnel 444. The physical interfaces 434, 446 may be directly connected to 10 Gbps network interfaces (such as SFP+).

Note that the cryptographic module 130 may also include, besides the transformation block 148 for the transmission, also an inverse transformation block 450 for the reception including a physical interface 446, a SA-lookup ESP 448 to a black SAD 462, a decryption 450 from the black side 210 to the red side 200 (computing and verifying 452 the KMAC 256 and decrypting 454 the AES 256), and checking 458 against an IPsec replay attack using a database 460 keeping track of seen unique sequence number of each received transformed packet.

The PS 410 includes a real-time processing unit ARMOO Cortex^{™}-R5 412, an application processing unit ARM^{®} Cortex^{™}-A53 430, and SRAM 426.

The application processing unit 420 may include a general management block 422 and a key management block 424.

The SRAM 426 is used to store the original SPD 134 and a copy 428 of the SAD 136 but without secret key material.

A management interface 430 of the MPSoC couples to the earlier mentioned separate communication channel 184, which is configured to transfer the control data 186 between the preprocessing apparatus 110 and the cryptographic module 130.

Finally, MPSoC also includes numerous other elements not described here for the sake of brevity.

In the described configuration, even the PS 410 would be too slow to handle 10 Gbps network traffic, and also the interface between the PS 410 and PL 132 would be too slow. But, with the use of the preprocessing apparatus 110, the PS 410 and PL 132 have enough processing speed, and also the low bandwidth communication channel between the PS 410 and the PL 132 is fast enough.

In an embodiment, the preprocessing apparatus 110 is caused, in the embedding of the index 164 in 526, to embed the index 164 into an Ethernet header coupled with the packet 160. One way to implement this is to use a source or destination MAC (Medium Access Control) field to carry the index 164. In this way, the communication coupling 182 may operate using standard protocols and no additional custom field is required, but only a reuse of an existing field not needed for the communication from the preprocessing apparatus 110 to the cryptographic module 130.

In an embodiment illustrated in FIG. 1, the cryptographic module 130 is caused, for the transforming in 550, to use an IPsec (Internet Protocol Security) Encapsulating Security Payload (ESP) protocol 150. The current version of the ESP protocol 150 is defined in RFC 4303. IPsec, in general, is a secure network protocol suite that authenticates and encrypts the packets and provides the integrity and replay protection to provide secure encrypted communication between two computers over the IP communication network. IPsec defines protocols for establishing mutual authentication between agents at the beginning of a session and negotiation of cryptographic keys to use during the session. IPsec supports network-level peer authentication, data-origin authentication, data integrity, data confidentiality (by encryption), and replay protection. The secret keys stay always inside the cryptographic module 130.

In an embodiment illustrated in FIG. 1, the cryptographic module 130 is caused, in the retrieving of the security association instance 138A in 542, to access the security association database 136 using a direct array access 146 with a constant time. Using this fast, simple and constant time (O(1)) access, it may be ensured that the cryptographic module 130 is able to perform its operations in a time constraint set by the data transmission speed of the flow of the packets.

In an embodiment illustrated in FIG. 5, the preprocessing apparatus 110 is caused, in the maintaining of the copy of the security policy database 118 in 502, to receive in 504 a copy of the security policy database 118 from a transmission initiated by the cryptographic module 130, and store in 506 the copy of the security policy database 118 into the one or more memories 112. The cryptographic module 130 is caused to maintain in 530 the original security policy database 134 accommodating the rules, and transmit in 532 a copy of the security policy database 134 accommodating the rules to the preprocessing apparatus 110.

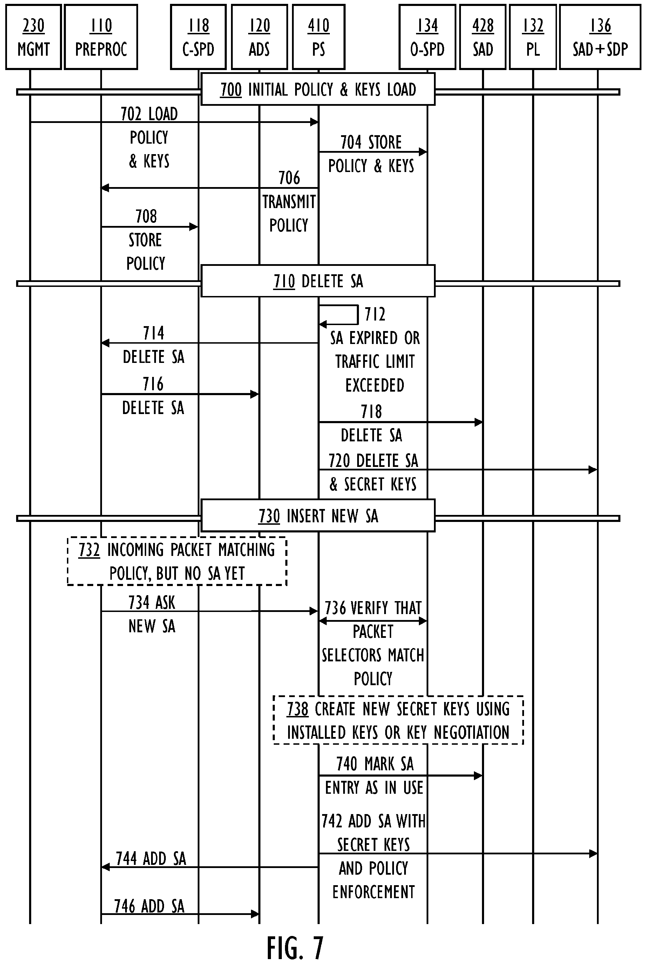

FIG. 7 illustrates embodiments of an initial policy and keys load 700 in the earlier described MPSoC implementation. A management apparatus 230 illustrated in FIG. 2 loads 702 the policy and keys to the PS 410 of the cryptographic module 130, which in turn stores 704 them in the original SPD 134. The PS 410 of the cryptographic module 130 transmits 706 the policy to the preprocessing apparatus 110, which in turn stores 708 them in the copy of the SPD 118.

In an embodiment illustrated in FIG. 5, the preprocessing apparatus 110 is caused, in the maintaining of the association data structure 120 in 508, to receive in 510 insert and delete events 536 related to the security association database 428 from the cryptographic module 130, and update in 512 the association data structure 120 stored in the one or more memories 112 based on the insert and delete events 536.

The embodiment using operations 516 and 518 in FIG. 5 was described earlier. Let us now describe an alternative embodiment, wherein the preprocessing apparatus 110 is caused, after looking up the matching rule from the copy of the security policy database 118 and the matching copy instance 122A from the association data structure 120 for the packet 160 in 514, if the matching rule is found but the matching copy instance 122A is not found in 520, to queue (or drop) the packet 160 in 522, and to signal in 524 the cryptographic module 130 to obtain new secret keys 144C for a new security association instance 138C in the security association database 136.

FIG. 7 illustrates an embodiment of deleting 710 a security association. In 712, the PS 410 of cryptographic module 130 detects that the security association has expired, or a traffic limit has been exceeded. In 714, a delete event is transmitted from the PS 410 to the preprocessing apparatus 110. The preprocessing apparatus 716 deletes the corresponding copy instance from the association data structure 120. In 718, the PS 410 deletes the security association instance from the copy SAD 428. In 720, the PS 410 also causes the deletion of the security association instance with secret keys from the security association database 136 of the PL 132.

FIG. 7 illustrates an embodiment of inserting 730 a new security association. In 732, the preprocessing apparatus 110 detects that an incoming packet matches a policy, but there is no security association instance yet. In 734, the preprocessing apparatus 110 asks the PS 410 to negotiate a new security association instance. In 736, the PS 410 verifies that the packet selectors (note that the packet is not transmitted to the PS 410, but only the packet selectors or a reference to a desired policy entry) match policy in the original SPD 134. After a successful verification, the PS 410 creates in 738 a new security association instance and secret keys using installed keys or a new key negotiation. The PS 410 also stores the new security association instance but without secret key material into the copy SAD 428. In 740, the PS 410 marks the new security association entry as "in use" in the copy SAD 428. The key negotiation may be performed using Internet Key Exchange version 2 (IKEv2) protocol defined in RFC 7296, for example. In 742, the PS 410 also causes an addition of the new security association instance (possibly with a valid bit to mark the entry valid) with secret keys into the security association database 136 of the PL 132. In 744, the PS 410 transmits the new security association instance but without the secret keys to the preprocessing apparatus 110. The preprocessing apparatus 110 then stores the new copy instance into the association data structure 120.

Even though the invention has been described with reference to one or more embodiments according to the accompanying drawings, it is clear that the invention is not restricted thereto but can be modified in several ways within the scope of the appended claims. All words and expressions should be interpreted broadly, and they are intended to illustrate, not to restrict, the embodiments. It will be obvious to a person skilled in the art that, as technology advances, the inventive concept can be implemented in various ways.

## Claims

1. An arrangement (100) for transforming packets in an Internet Protocol (IP) communication network (200), the arrangement (100) comprising a preprocessing apparatus (110), a cryptographic module (130), and a communication coupling (182) between the preprocessing apparatus (110) and the cryptographic module (130), wherein
the preprocessing apparatus (110) comprises one or more memories (112) including computer program code (114), and one or more processors (116) configured to execute the computer program (114) code to cause the preprocessing apparatus (110) to perform at least the following:
receiving (504) a copy of a security policy database (118) from a transmission initiated by the cryptographic module (130), and storing (506) the copy of the security policy database (118) into the one or more memories (112) and maintaining (502) the copy of the security policy database (118) accommodating rules received from the cryptographic module (130)
maintaining (508) an association data structure (120) accommodating a plurality of copy instances (122A, 122B, 122C) based on data received from the cryptographic module (130), each copy instance (122A, 122B, 122C) containing a state (124A, 124B, 124C) of a flow of packets, without secret keys, but with an index (126A, 126B, 126C) to a corresponding security association instance (138A, 138B, 138C) in a security association database (136) of the cryptographic module (130);
looking (514) up for a packet (160) a matching rule from the copy of the security policy database (118) and looking (514) up for the packet (160) a matching copy instance (122A) from the association data structure (120); and
embedding (526) into the packet (160) an index (164; 126A) from the matching copy instance (122A), and
the cryptographic module (130) comprises a hardware logic (132) configured to cause the cryptographic module (130) to perform at least the following:
maintaining (530) an original security policy database (134) accommodating the rules; and
transmitting (532) a copy of the security policy database (134) accommodating the rules to the preprocessing apparatus (110);
maintaining (534) a security association database (136) accommodating a plurality of security association instances (138A, 138B, 138C), each security association instance (138A, 138B, 138C) being accessible by an index (140A, 140B, 140C) and containing rules (142A, 142B, 142C) of the security policy database (134) relevant for the security association instance (138A, 138B, 138C);
reading (540) the index (164) from the packet (160);
retrieving (542) a security association instance (138A) from the security association database (136) based on the index (166);
verifying (546) a compliance of the packet (160) to a policy defined by the security association instance (138A);
if the compliance of the packet (160) succeeds (548-YES), transforming (550) the packet (160) using secret keys (144A) of the retrieved security association instance (138A) into a transformed packet (170).

2. The arrangement of claim 1, wherein the cryptographic module (130) is caused to perform the following:
after the verifying (546) of the compliance, if the compliance of the packet (160) fails (548-NO), dropping (552) the packet (160).

3. The arrangement of any preceding claim, wherein the cryptographic module (130) is caused to perform the following:
in the retrieving (542) of the security association instance (138A), accessing the security association database (136) using a direct array access (146) with a constant time.

4. The arrangement of any preceding claim, wherein the IP communication network (200) comprises a red-black architecture, wherein plaintext information (162) of the packet (160) in a red side (210) of the IP communication network (200) having a high security level is transformed into ciphertext information (172) of the transformed packet (170) for a black side (220) of the IP communication network (200) having a low security level, wherein the high security level is more secure than the low security level.

5. The arrangement of claim 4, wherein the preprocessing apparatus (110) is comprised in a network node (212) operating in the red side (210), and the hardware logic (132) of the cryptographic module (130) is implemented using a field-programmable gate array or an application-specific integrated circuit.

6. The arrangement of claim 4 or 5, wherein the IP communication network (200) comprises a virtual private network (310) extending the red side (210, 308) across the black side (220).

7. The arrangement of any preceding claim, wherein the cryptographic module (130) is caused to perform the following:
for the transforming (550), using an IPsec Encapsulating Security Payload (ESP) protocol (150).

8. The arrangement of any preceding claim, wherein the preprocessing apparatus (110) is caused to perform the following:
in the maintaining (508) of the association data structure (120), receiving (510) insert and delete events (536) related to the security association database (428) from the cryptographic module (130), and updating (512) the association data structure (120) stored in the one or more memories (112) based on the insert and delete events (536).

9. The arrangement of any preceding claim, wherein the preprocessing apparatus (110) is caused to perform the following:
in the embedding (526) of the index (164), embedding the index (164) into an Ethernet header coupled with the packet (160).

10. The arrangement of any preceding claim, wherein the preprocessing apparatus (110) is caused to perform the following:
after looking (514) up the matching rule from the copy of the security policy database (118) and the matching copy instance (122A) from the association data structure (120) for the packet (160), if the matching rule or the matching copy instance (122A) is not found (516), dropping (518) the packet (160).

11. The arrangement of any preceding claim, wherein the preprocessing apparatus (110) is caused to perform the following:
after looking (514) up the matching rule from the copy of the security policy database (118) and the matching copy instance (122A) from the association data structure (120) for the packet (160), if the matching rule is found but the matching copy instance (122A) is not found (520), queueing (522) the packet (160), and signalling (524) the cryptographic module (130) to obtain new secret keys (144C) for a new security association instance (138C) in the security association database (136).

12. The arrangement of any preceding claim, wherein the cryptographic module (130) is caused to perform the following:
after reading (540) the index (164), if no security association instance (138A) is found (544-NO) in the security association database (136) based on the index (164), dropping (552) the packet (160).

13. The arrangement of any preceding claim, wherein the communication coupling (182) comprises an IP traffic channel configured to transmit the packets (160) from the preprocessing apparatus (110) to the cryptographic module (130), and a separate communication channel (184) is configured to transfer control data (186) between the preprocessing apparatus (110) and the cryptographic module (130).

## Patentansprüche

1. Anordnung (100) zum Umwandeln von Paketen in einem Internet-Protokoll(IP)-Kommunikationsnetzwerk (200), wobei die Anordnung (100) eine Vorverarbeitungsvorrichtung (110), ein kryptografisches Modul (130) und eine Kommunikationskopplung (182) zwischen der Vorverarbeitungsvorrichtung (110) und dem kryptografischen Modul (130) umfasst, wobei
die Vorverarbeitungsvorrichtung (110) einen oder mehrere Speicher (112) mit Computerprogrammcode (114) und einen oder mehrere Prozessoren (116) umfasst, die dafür konfiguriert sind, den Computerprogrammcode (114) auszuführen, um die Vorverarbeitungsvorrichtung (110) zu veranlassen, mindestens Folgendes durchzuführen:
Empfangen (504) einer Kopie einer Sicherheitsrichtlinien-Datenbank (118) aus einer durch das kryptografische Modul (130) initiierten Übertragung und Speichern (506) der Kopie der Sicherheitsrichtlinien-Datenbank (118) in dem einen oder den mehreren Speichern (112) und Aufrechterhalten (502) der Kopie der Sicherheitsrichtlinien-Datenbank (118), die von dem kryptografischen Modul (130) empfangene Regeln aufnimmt,
Aufrechterhalten (508) einer Zuordnungsdatenstruktur (120), die eine Vielzahl von Kopieinstanzen (122A, 122B, 122C) basierend auf von dem kryptografischen Modul (130) empfangenen Daten aufnimmt, wobei jede Kopieinstanz (122A, 122B, 122C) einen Zustand (124A, 124B, 124C) eines Flusses von Paketen, ohne geheime Schlüssel aber mit einem Index (126A, 126B, 126C) zu einer entsprechenden Sicherheitszuordnungsinstanz (138A, 138B, 138C) in einer Sicherheitszuordnungs-Datenbank (136) des kryptografischen Moduls (130) enthält;
Suchen (514) einer passenden Regel aus der Kopie der Sicherheitsrichtlinien-Datenbank (118) für ein Paket (160) und Suchen (514) einer passenden Kopieinstanz (122A) aus der Zuordnungsdatenstruktur (120) für das Paket (160); und
Einbetten (526) eines Index (164; 126A) aus der passenden Kopieinstanz (122A) in das Paket (160), und
wobei das kryptografische Modul (130) eine Hardware-Logik (132) umfasst, die so konfiguriert ist, dass sie das kryptografische Modul (130) veranlasst, mindestens Folgendes durchzuführen:
Aufrechterhalten (530) einer ursprünglichen Sicherheitsrichtlinien-Datenbank (134), die die Regeln aufnimmt; und
Übermitteln (532) einer Kopie der Sicherheitsrichtlinien-Datenbank (134), die die Regeln aufnimmt, an die Vorverarbeitungsvorrichtung (110);
Aufrechterhalten (534) einer Sicherheitszuordnungs-Datenbank (136), die eine Vielzahl von Sicherheitszuordnungsinstanzen (138A, 138B, 138C) aufnimmt, wobei auf jede Sicherheitszuordnungsinstanz (138A, 138B, 138C) durch einen Index (140A, 140B, 140C) zugegriffen werden kann und die Regeln (142A, 142B, 142C) der Sicherheitsrichtlinien-Datenbank (134) enthält, die für die Sicherheitszuordnungsinstanz (138A, 138B, 138C) relevant sind;
Lesen (540) des Index (164) aus dem Paket (160);
Abrufen (542) einer Sicherheitszuordnungsinstanz (138A) aus der Sicherheitszuordnungs-Datenbank (136) auf der Grundlage des Index (166);
Überprüfen (546) einer Übereinstimmung des Pakets (160) mit einer Richtlinie, die durch die Sicherheitszuordnungsinstanz (138A) definiert ist;
wenn die Übereinstimmung des Pakets (160) erfolgreich ist (548-JA), Umwandeln (550) des Pakets (160) unter Verwendung geheimer Schlüssel (144A) der abgerufenen Sicherheitszuordnungsinstanz (138A) in ein transformiertes Paket (170).

2. Anordnung nach Anspruch 1, wobei das kryptografische Modul (130) veranlasst wird, Folgendes durchzuführen:
nach dem Überprüfen (546) der Übereinstimmung, wenn die Übereinstimmung des Pakets (160) fehlschlägt (548-NEIN), Verwerfen (552) des Pakets (160).

3. Anordnung nach einem der vorstehenden Ansprüche, wobei das kryptografische Modul (130) veranlasst wird, Folgendes durchzuführen:
beim Abrufen (542) der Sicherheitszuordnungsinstanz (138A) Zugreifen auf die Sicherheitszuordnungs-Datenbank (136) unter Verwendung eines direkten Array-Zugriffs (146) mit einer konstanten Zeit.

4. Anordnung nach einem der vorstehenden Ansprüche, wobei das IP-Kommunikationsnetzwerk (200) eine Rot-Schwarz-Architektur umfasst, wobei Klartextinformationen (162) des Pakets (160) in einer roten Seite (210) des IP-Kommunikationsnetzwerks (200) mit einem hohen Sicherheitsniveau in Chiffretextinformationen (172) des transformierten Pakets (170) für eine schwarze Seite (220) des IP-Kommunikationsnetzwerks (200) mit einem niedrigen Sicherheitsniveau umgewandelt werden, wobei das hohe Sicherheitsniveau sicherer ist als das niedrige Sicherheitsniveau.

5. Anordnung nach Anspruch 4, wobei die Vorverarbeitungsvorrichtung (110) in einem Netzwerkknoten (212) enthalten ist, der in der roten Seite (210) arbeitet, und die Hardware-Logik (132) des kryptografischen Moduls (130) unter Verwendung eines Field Programmable Gate Arrays oder einer anwendungsspezifischen integrierten Schaltung implementiert ist.

6. Anordnung nach Anspruch 4 oder 5, wobei das IP-Kommunikationsnetzwerk (200) ein virtuelles privates Netzwerk (310) umfasst, das die rote Seite (210, 308) über die schwarze Seite (220) erweitert.

7. Anordnung nach einem der vorstehenden Ansprüche, wobei das kryptografische Modul (130) veranlasst wird, Folgendes durchzuführen:
Verwenden eines IPsec Encapsulating Security Payload(ESP)-Protokolls (150) für das Umwandeln (550).

8. Anordnung nach einem der vorstehenden Ansprüche, wobei die Vorverarbeitungsvorrichtung (110) veranlasst wird, Folgendes durchzuführen:
beim Aufrechterhalten (508) der Zuordnungsdatenstruktur (120), Empfangen (510) von Einfüge- und Löschereignissen (536), die sich auf die Sicherheitszuordnungs-Datenbank (428) beziehen, von dem kryptografischen Modul (130) und Aktualisieren (512) der Zuordnungsdatenstruktur (120), die in dem einen oder den mehreren Speichern (112) gespeichert ist, auf der Grundlage der Einfüge- und Löschereignisse (536).

9. Anordnung nach einem der vorstehenden Ansprüche, wobei die Vorverarbeitungsvorrichtung (110) veranlasst wird, Folgendes durchzuführen:
beim Einbetten (526) des Index (164), Einbetten des Index (164) in einen Ethernet-Header, der mit dem Paket (160) gekoppelt ist.

10. Anordnung nach einem der vorstehenden Ansprüche, wobei die Vorverarbeitungsvorrichtung (110) veranlasst wird, Folgendes durchzuführen:
nach dem Suchen (514) der passenden Regel aus der Kopie der Sicherheitsrichtlinien-Datenbank (118) und der passenden Kopieinstanz (122A) aus der Zuordnungsdatenstruktur (120) für das Paket (160), wenn die passende Regel oder die passende Kopieinstanz (122A) nicht gefunden wird (516), Verwerfen (518) des Pakets (160).

11. Anordnung nach einem der vorstehenden Ansprüche, wobei die Vorverarbeitungsvorrichtung (110) veranlasst wird, Folgendes durchzuführen:
nach dem Suchen (514) der passenden Regel aus der Kopie der Sicherheitsrichtlinien-Datenbank (118) und der passenden Kopieinstanz (122A) aus der Zuordnungsdatenstruktur (120) für das Paket (160), wenn die passende Regel gefunden wird, die passende Kopieinstanz (122A) jedoch nicht gefunden wird (520), Einreihen (522) des Pakets (160) in die Warteschlange und Signalisieren (524) an das kryptografische Modul (130), um neue geheime Schlüssel (144C) für eine neue Sicherheitszuordnungsinstanz (138C) in der Sicherheitszuordnungs-Datenbank (136) zu erhalten.

12. Anordnung nach einem der vorstehenden Ansprüche, wobei das kryptografische Modul (130) veranlasst wird, Folgendes durchzuführen:
nach dem Lesen (540) des Indexes (164), wenn basierend auf dem Index (164) keine Sicherheitszuordnungsinstanz (138A) in der Sicherheitszuordnungs-Datenbank (136) gefunden wird (544-NO), Verwerfen (552) des Pakets (160).

13. Anordnung nach einem der vorstehenden Ansprüche, wobei die Kommunikationskopplung (182) einen IP-Datenverkehrskanal umfasst, der so konfiguriert ist, dass er die Pakete (160) von der Vorverarbeitungsvorrichtung (110) zu dem kryptografischen Modul (130) überträgt, und ein separater Kommunikationskanal (184) so konfiguriert ist, dass er Steuerdaten (186) zwischen der Vorverarbeitungsvorrichtung (110) und dem kryptografischen Modul (130) überträgt.

## Revendications

1. Agencement (100) pour transformer des paquets dans un réseau de communication (200) de protocole Internet (IP), l'agencement (100) comprenant un appareil de prétraitement (110), un module cryptographique (130), et un couplage de communication (182) entre l'appareil de prétraitement (110) et le module cryptographique (130), dans lequel
l'appareil de prétraitement (110) comprend une ou plusieurs mémoires (112) comportant un code de programme informatique (114), et un ou plusieurs processeurs (116) configurés pour exécuter le code de programme informatique (114) pour amener l'appareil de prétraitement (110) à réaliser au moins ce qui suit :
recevoir (504) une copie d'une base de données de politique de sécurité (118) d'une transmission initiée par le module cryptographique (130), et stocker (506) la copie de la base de données de politique de sécurité (118) dans les une ou plusieurs mémoires (112), et conserver (502) la copie de la base de données de politique de sécurité (118) accueillant des règles reçues du module cryptographique (130) ;
conserver (508) une structure de données d'association (120) accueillant une pluralité d'instances de copie (122A, 122B, 122C) en fonction de données reçues du module cryptographique (130), chaque instance de copie (122A, 122B, 122C) contenant un état (124A, 124B, 124C) d'un flux de paquets, sans clés secrètes, mais avec un index (126A, 126B, 126C) vers une instance d'association de sécurité (138A, 138B, 138C) correspondante dans une base de données d'association de sécurité (136) du module cryptographique (130) ;
rechercher (514), pour un paquet (160), une règle concordante dans la copie de la base de données de politique de sécurité (118), et rechercher (514), pour le paquet (160), une instance de copie (122A) concordante dans la structure de données d'association (120) ; et
incorporer (526) dans le paquet (160) un index (164 ; 126A) provenant de l'instance de copie (122A) concordante, et
le module cryptographique (130) comprend une logique matérielle (132) configurée pour amener le module cryptographique (130) à réaliser au moins ce qui suit :
conserver (530) une base de données de politique de sécurité (134) originale accueillant les règles ; et
transmettre (532) une copie de la base de données de politique de sécurité (134) accueillant les règles à l'appareil de prétraitement (110) ;
conserver (534) une base de données d'association de sécurité (136) accueillant une pluralité d'instances d'association de sécurité (138A, 138B, 138C), chaque instance d'association de sécurité (138A, 138B, 138C) étant accessible par un index (140A, 140B, 140C) et contenant des règles (142A, 142B, 142C) de la base de données de politique de sécurité (134) pertinentes pour l'instance d'association de sécurité (138A, 138B, 138C) ;
lire (540) l'index (164) du paquet (160) ;
récupérer (542) une instance d'association de sécurité (138A) dans la base de données d'association de sécurité (136) en fonction de l'index (166) ;
vérifier (546) la conformité du paquet (160) à une politique définie par l'instance d'association de sécurité (138A) ;
si la conformité du paquet (160) est positive (548-YES), transformer (550) le paquet (160) à l'aide de clés secrètes (144A) de l'instance d'association de sécurité (138A) récupérée en un paquet (170) transformé.

2. Agencement de la revendication 1, dans lequel le module cryptographique (130) est amené à réaliser ce qui suit :
après la vérification (546) de la conformité, si la conformité du paquet (160) échoue (548-NO), laisser tomber (552) le paquet (160).

3. Agencement de l'une des revendications précédentes, dans lequel le module cryptographique (130) est amené à réaliser ce qui suit :
lors de la récupération (542) de l'instance d'association de sécurité (138A), accéder à la base de données d'association de sécurité (136) à l'aide d'un accès direct à la matrice (146) avec un temps constant.

4. Agencement de l'une des revendications précédentes, dans lequel le réseau de communication IP (200) comprend une architecture rouge-noire, dans lequel des informations en texte clair (162) du paquet (160) dans un côté rouge (210) du réseau de communication IP (200) ayant un niveau de sécurité élevé sont transformées en informations en texte chiffré (172) du paquet (170) transformé pour un côté noir (220) du réseau de communication IP (200) ayant un niveau de sécurité faible, dans lequel le niveau de sécurité élevé est plus sûr que le niveau de sécurité faible.

5. Agencement de la revendication 4, dans lequel l'appareil de prétraitement (110) est compris dans un noeud de réseau (212) fonctionnant du côté rouge (210), et la logique matérielle (132) du module cryptographique (130) est mise en œuvre à l'aide d'une matrice de portes programmables par l'utilisateur ou d'un circuit intégré spécifique à l'application.

6. Agencement de la revendication 4 or 5, dans lequel le réseau de communication IP (200) comprend un réseau privé virtuel (310) qui s'étend du côté rouge (210, 308) au côté noir (220).

7. Agencement de l'une des revendications précédentes, dans lequel le module cryptographique (130) est amené à réaliser ce qui suit :
pour la transformation (550), utiliser un protocole Encapsulating Security Payload (ESP) IPsec (150).

8. Agencement de l'une des revendications précédentes, dans lequel l'appareil de prétraitement (110) est amené à réaliser ce qui suit :
lors de la conservation (508) de la structure de données d'association (120), recevoir (510) des événements d'insertion et de suppression (536) relatifs à la base de données d'association de sécurité (428) en provenance du module cryptographique (130), et mettre à jour (512) la structure de données d'association (120) stockée dans les une ou plusieurs mémoires (112) en fonction des événements d'insertion et de suppression (536).

9. Agencement de l'une des revendications précédentes, dans lequel l'appareil de prétraitement (110) est amené à réaliser ce qui suit :
lors de l'incorporation (526) de l'index (164), incorporer l'index (164) dans un en-tête Ethernet couplé au paquet (160).

10. Agencement de l'une des revendications précédentes, dans lequel l'appareil de prétraitement (110) est amené à réaliser ce qui suit :
après la recherche (514) de la règle concordante dans la copie de la base de données de politique de sécurité (118) et de l'instance de copie (122A) concordante dans la structure de données d'association (120) pour le paquet (160), si la règle concordante ou l'instance de copie (122A) concordante n'est pas trouvée (516), laisser tomber (518) le paquet (160).

11. Agencement de l'une des revendications précédentes, dans lequel l'appareil de prétraitement (110) est amené à réaliser ce qui suit :
après la recherche (514) de la règle concordante dans la copie de la base de données de politique de sécurité (118) et de l'instance de copie (122A) concordante dans la structure de données d'association (120) pour le paquet (160), si la règle concordante est trouvée mais que l'instance de copie (122A) concordante n'est pas trouvée (520), mettre en file d'attente (522) le paquet (160), et signaler (524) au module cryptographique (130) d'obtenir de nouvelles clés secrètes (144C) pour une nouvelle instance d'association de sécurité (138C) dans la base de données d'association de sécurité (136).

12. Agencement de l'une des revendications précédentes, dans lequel le module cryptographique (130) est amené à réaliser ce qui suit :
après la lecture (540) de l'index (164), si aucune instance d'association de sécurité (138A) n'est trouvée (544-NO) dans la base de données d'association de sécurité (136) en fonction de l'index (164), laisser tomber (552) le paquet (160).

13. Agencement de l'une des revendications précédentes, dans lequel le couplage de communication (182) comprend un canal de trafic IP configuré pour transmettre les paquets (160) de l'appareil de prétraitement (110) au module cryptographique (130), et un canal de communication (184) séparé est configuré pour transférer des données de commande (186) entre l'appareil de prétraitement (110) et le module cryptographique (130).
